# EUROPEAN PATENT APPLICATION

(11) **EP 4 338 602 A1**
(43) Date of publication of application: **20.03.2024**
(21) Application number: 22876741.4
(22) Date of filing: 21.09.2022
(51) Int. Cl.: A24B 3/14, A24B 15/12, A24B 15/14, A24D 3/10, A24D 1/00, A24D 1/18, D21H 11/00, D21H 17/03, A24B 15/32, A24B 15/42

(54) **FLAVOR SHEET HAVING IMPROVED SURFACE ROUGHNESS, SMOKING ARTICLE COMPRISING SAME, AND RESPECTIVE METHODS FOR PRODUCING SAME**

(30) Priority: 01.10.2021 KR 20210130789
(71) Applicant: KT & G Corporation, Daejeon 34337 (KR)
(72) Inventor: LEE, Geon Chang, Daejeon 34128 (KR); KIM, Ick Joong, Daejeon 34128 (KR); JUNG, Kyung Bin, Daejeon 34128 (KR); JEOUNG, Eun Mi, Daejeon 34128 (KR); HWANG, Min Hee, Daejeon 34128 (KR)
(74) Representative: Ter Meer Steinmeister & Partner
(86) International application number: PCT/KR2022/014065
(87) International publication number: WO 2023/054968

(57) **Abstract**

Provided are a flavored sheet with improved surface roughness, a smoking article including the same, and a method of manufacturing the same. A method of manufacturing a flavored sheet according to some embodiments of the present disclosure may include preparing a sheet composition by mixing a hydrocolloid material, a solvent, a powdered material, and a flavor and drying the prepared sheet composition. The powdered material may improve the surface roughness of the flavored sheet, thereby ultimately enhancing the mixing property of a cut filler-type tobacco material.

## Description

### [Technical Field]

The present disclosure relates to a flavored sheet with improved surface roughness, a smoking article including the same, and a method of manufacturing the same. More particularly, the present disclosure relates to a flavored sheet with improved surface roughness to enhance a mixing property with a cut filler-type tobacco material, a smoking article which includes the flavored sheet to improve flavor expression and persistence, and a method of manufacturing the flavored sheet.

### [Background Art]

To satisfy the taste of smokers, smoking articles (e.g., cigarettes) are flavored in various ways. An example of a typical flavoring method is direct addition (e.g., spraying) of a flavoring liquid to a smoking material such as a cut filler or a filter plug. However, the exemplified methods have various problems of a limited amount of an added flavoring liquid, the non-expression of an intended flavor, or a rapid decrease in flavor expression during smoking.

Specifically, it is difficult for the method of adding a flavoring liquid to a smoking material to add a large amount of flavoring liquid because the flavoring liquid and a smoking material may agglomerate together. In addition, due to a high heating temperature (or combustion temperature) during smoking, as the flavoring liquid deteriorates, unintended flavors may be expressed. Next, the method of adding a flavoring liquid to a filter plug may add a larger amount of flavoring liquid compared to the above-described method, but has a limitation to an added amount of the flavoring liquid.

Meanwhile, either method has a problem in that the added flavoring liquid is rapidly expressed at the beginning of smoking, so the flavor expression decreases toward the latter part of smoking, and when an excess of flavoring liquid is added, it may also have a problem in that a wrapper surrounding a filter plug or smoking material may get wet and become contaminated.

### [Disclosure]

### [Technical Problem]

A technical problem to be solved through some embodiments of the present disclosure is to provide a flavored sheet with improved surface roughness and a method of manufacturing the same.

Another technical problem to be solved through some embodiments of the present disclosure is to provide a smoking article with improved flavor expression and persistence and a method of manufacturing the same.

The technical problems of the present disclosure are not limited to the above-mentioned technical problems, and other technical problems not mentioned will be clearly understood by those of ordinary skill in the art from the description below.

### [Technical Solution]

To solve the technical problems, a method of manufacturing a flavored sheet according to some embodiments of the present disclosure may include preparing a sheet composition by mixing a hydrocolloid material, a solvent, a powdered material and a flavoring, and drying the prepared sheet composition.

In some embodiments, the hydrocolloid material may include a modified cellulose material.

In some embodiments, the drying of the prepared sheet composition may include applying the prepared sheet composition and adding and drying a powdered material to the applied sheet composition.

In some embodiments, the powdered material may be a material that is poorly soluble or insoluble in the solvent.

In some embodiments, the powdered material may be a bulking agent.

In some embodiments, the powdered material may be an emulsifier.

To solve the technical problems, a flavored sheet according to some embodiments of the present disclosure may be manufactured by preparing a sheet composition by mixing a hydrocolloid material, a solvent, a powdered material and a flavoring, and drying the manufactured sheet composition.

To solve the technical problems, a smoking article according to some embodiments of the present disclosure may include a smoking material part in which pieces of a cut flavored sheet and a cut filler-type tobacco material are mixed. Here, the flavored sheet may be manufactured by preparing a sheet composition be mixing a hydrocolloid material, a solvent, a powdered material and a flavoring and drying the prepared sheet composition.

### [Advantageous Effects]

According to some embodiments of the present disclosure, which have been described above, a flavored sheet with improved (increased) surface roughness can be manufactured by mixing a powdered material with a sheet composition or adding a powdered material in the manufacturing process. Since such a flavored sheet has a smaller substantial area that can be in contact with another material, an agglomeration phenomenon (e.g., sticking together) can be minimized when mixed with a cut filler-type tobacco material. Accordingly, a cut filler-type tobacco material and pieces of a cut flavored sheet can be evenly mixed, and the workability of a mixing process can be improved.

In addition, a smoking article in which pieces of a cut flavored sheet and a cut filler-type tobacco material can be provided. Such a smoking article can ensure uniform flavor expression and excellent flavor persistence.

In addition, as a powdered material, a poorly-soluble or insoluble material may be used. In this case, as the added powdered material remains on the surface of the flavored sheet almost as it is, the surface roughness of the flavored sheet can be further improved.

In addition, as the powdered material, a bulking agent may be used. In this case, the surface roughness can be improved, and the filling ability and flavor retention ability of the flavored sheet can also be improved.

In addition, as the powdered material, an emulsifier may be used. The emulsifier can improve the roughness of the flavored sheet and also improve a flavor holding amount and flavor retention as serving as a crosslink between a water-soluble hydrocolloid material and an oil-soluble flavoring.

Effects according to the technical idea of the present disclosure are not limited to the above-described effects, and other effects not described will be clearly understood by those of ordinary skill in the art from the description below.

### [Description of Drawings]

FIG. 1 is an exemplary flow chart schematically illustrating a method of manufacturing a flavored sheet according to some embodiments of the present disclosure.
FIG. 2 is an exemplary view for further explaining the method of manufacturing a flavored sheet according to some embodiments of the present disclosure.
FIG. 3 is an exemplary view schematically illustrating a smoking article according to some embodiments of the present disclosure.
FIG. 4 is an exemplary view for explaining a method of applying a flavored sheet according to some embodiments of the present disclosure.

### [Modes of the Invention]

Hereinafter, exemplary embodiments of the present disclosure will be described in detail with reference to the accompanying drawings. The advantages and features of the present disclosure and the methods of accomplishing the same will become apparent with reference to the detailed description of exemplary embodiments and the accompanying drawings. However, the present disclosure is not limited to the exemplary embodiments disclosed below, and may be embodied in many different forms. These exemplary embodiments are merely provided to complete the disclosure of the present disclosure and fully convey the scope of the present disclosure to those of ordinary skill in the art, and the present disclosure should be defined by only the accompanying claims.

It should be noted that, when reference numerals are assigned to components of each drawing, like components are denoted by like reference numerals, even if they are represented in different drawings. In addition, in explanation of embodiments of the present disclosure, detailed descriptions of known configurations or functions related thereto will be omitted when it is determined that the detailed descriptions would hinder the understanding of the embodiments of the present disclosure.

Unless defined otherwise, all terms (including technical and scientific terms) used herein may be used in a sense that is commonly understood by one of ordinary skill in the art to which the present disclosure belongs. Also, generally used terms defined in dictionaries are not ideally or excessively interpreted unless explicitly defined otherwise. The terms used herein are for describing embodiments and are not intended to limit the present invention. Herein, singular forms include plural forms unless specifically stated otherwise.

In addition, in describing the components of the present disclosure, the terms, for example, first, second, A, B, (a), and (b) may be used. These terms are only used to distinguish one component from another component, and the nature, sequence or order of a corresponding component is not limited by the term. When one component is described as being "connected with," "coupled to," or "in contact with" another component, the component may be directly connected with or in direct contact with another component, and it should be understood that a third component may be "connected with," "coupled to," or "in contact" between the two components.

The "comprise" or "include," and/or "comprising" or "including" used in the present disclosure do not preclude the presence or addition of one or more other components, steps and/or elements, in addition to the mentioned component, step and/or element.

First, some terms used in various embodiments of the present disclosure will be clarified.

The "smoking article" used in the following embodiments may refer to any smokable product or any product that can provide a smoking experience, whether or not based on tobacco, tobacco derivatives, expanded tobacco, reconstituted tobacco, or tobacco substitutes. For example, the smoking articles may include smokable products such as cigarettes, cigars and cigarillos. As another example, the smoking articles may include a combustion smoking article and a heated smoking article.

The "smoking material" used in the following embodiments may refer to a material that generates smoke and/or aerosol or is used in smoking. For example, the smoking material may include a tobacco material. The tobacco material may include, for example, pieces of tobacco leaves, tobacco stems, or a material processed therefrom. As a more specific example, the tobacco material may include, but is not limited to, shredded tobacco leaves, shredded reconstituted tobacco, an expanded cut filler, expanded midribs, and reconstituted tobacco leaves.

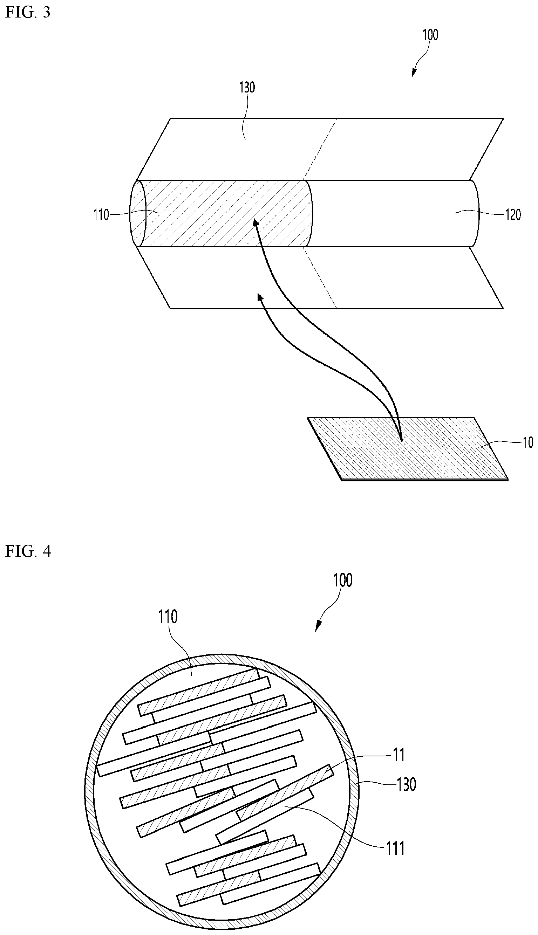

The "upstream" or "upstream direction" used in the following embodiments may refer to a direction away from a smoker's mouth, and the "downstream" or "downstream direction" may refer to a direction close to a smoker's mouth. The terms "upstream" and "downstream" may be used to explain relative positions of elements constituting a smoking article. For example, in a smoking article 100 shown in FIG. 3, a filter part 120 is located downstream or in the downstream direction of a smoking material part 110, and the smoking material part 110 is located upstream or in the upstream direction of the filter part 120.

The "longitudinal direction" used in the following embodiments may refer to a direction corresponding to the longitudinal direction of the smoking article.

The "puff" used in the following embodiments refers to inhalation of a user (smoker), and the inhalation may refer to an instance of drawing air/smoke into the oral cavity, nasal cavity or lungs of a user through a mouth or nose.

The "sheet" used in the following embodiments may refer to a laminar element with a substantially larger width and length than the thickness thereof. In the art, the term "sheet" may be used interchangeably with a web or film.

The "flavored sheet" used in the following embodiments may refer to a flavor-containing material, which is manufactured in the form of a sheet.

The "powder" used in the following embodiments may encompass all types of particles, powders, beads, and granules.

Hereinafter, various embodiments of the present disclosure will be described in detail.

According to some embodiments of the present disclosure, a flavored sheet with improved surface roughness may be provided. Specifically, a flavored sheet with improved surface roughness may be manufactured by adding a powdered material in a process of manufacturing a flavored sheet. Such a flavored sheet has a relatively small actual area that can be in contact with another substance and thus can be evenly mixed with a cut filler-type tobacco material (e.g., cut leaf tobacco filler, cut reconstituted tobacco filler) in the manufacture of a smoking particle. For example, in further detail, when mixing pieces of a cut flavored sheet and a leaf tobacco cut filler, due to the influence of water contained in the flavored sheet and the leaf tobacco cut filler, agglomeration of the cut pieces of sheet and the leaf tobacco cut filler may occur. Such agglomeration may accelerate as the surface area (or contact area) of the flavored sheet (or a piece of the cut sheet) is larger, and since the actual contact area is reduced when the surface roughness is increased, the agglomeration may be effectively prevented, and thus the pieces of a cut flavored sheet and the leaf tobacco cut filler may be evenly mixed.

The above-described flavored sheet will be described in detail below with reference to the accompanying drawings.

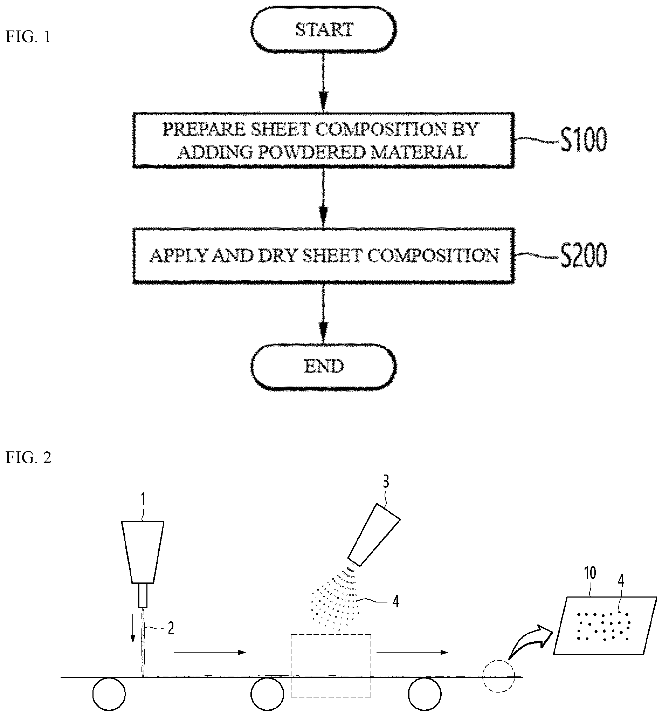

FIG. 1 is an exemplary flow chart schematically illustrating a method of manufacturing a flavored sheet according to some embodiments of the present disclosure. However, this is only an exemplary embodiment to achieve the purpose of the present disclosure, and some steps may be added or deleted as needed.

As shown in FIG. 1, the manufacturing method according to this embodiment may begin with S 100, which is a step of preparing a sheet composition by mixing a powdered material. Specifically, a hydrocolloid material, a solvent such as distilled water or ethanol, a flavor and a powdered material may be mixed to prepare a sheet composition in a liquid phase (e.g., slurry state). Here, the liquid phase may include not only a liquid state but also a mixture of a liquid and a solid (e.g., slurry state).

The solvent such as distilled water or ethanol may be an element for adjusting the viscosity of a slurry-type sheet composition.

Next, the hydrocolloid material may be a material that coats and fixes a flavor, and a sheet-former that forms a sheet. Since the hydrocolloid material itself has viscosity when in contact with a solvent such as distilled water or ethanol, a flavored sheet based on this material has the advantage that it can be easily attached to a smoking article without a separate adhesive. For example, in the case that the flavored sheet is disposed on a wrapper of a smoking article, when the hydrocolloid material is used as a sheet forming agent, a batch process of the flavored sheet may be simplified, and it can be free from a safety problem caused by an adhesive.

Examples of such hydrocolloid materials may include, but is not limited to, gelatin, agar, gellan gum, pectin, guar gum, xanthan gum, glucomannan, hydroxypropylmethyl cellulose (HPMC), methylcellulose (MC), ethyl cellulose (EC), carboxymethyl cellulose (CMC), and starch.

In some embodiments, the sheet composition may include a modified cellulose material among various hydrocolloid materials. Here, the "modified cellulose" may refer to a cellulose in which a specific functional group is substituted in the molecular structure. Examples of the modified cellulose may include, but are not limited to, HPMC, MC, CMC, and EC. For example, HPMC may be graded within a range of approximately 4 to 40000 according to proportions of substituted hydroxypropyl groups and methyl groups (or methoxy groups) and their molecular weight. Depending on the grade, the viscosity of the modified cellulose may be determined. More specifically, the physicochemical properties of HPMC are related to the proportion of methoxy groups, the proportion of hydroxypropyl groups, and molecular weight, and according to the United States Pharmacopoeia (USP), the types of HPMC may be classified into HPMC 1828, HPMC2208, HPMC2906 and HPMC2910 according to the proportions of methoxy groups and hydroxypropyl groups. Here, the first two numbers may mean the proportion of methoxy groups, and the latter two numbers may mean the proportion of hydroxypropyl groups. As a result of continuous experiments conducted by the present inventors, it was confirmed that the flavored sheet prepared from the sheet composition containing modified cellulose has excellent sheet physical properties and a flavor holding amount.

Next, examples of the flavors may include menthol, nicotine, nicotine salts, leaf tobacco extracts, nicotine-containing leaf tobacco extracts, natural vegetable flavors (e.g., cinnamon, sage, herb, chamomile, winter hay, persimmon tea, clove, lavender, cardamom, clove, nutmeg, bergamot, geranium, honey essence, rose oil, lemon, orange, cinnamon, caraway, jasmine, ginger, coriander, vanilla extract, spearmint, peppermint, cassia, coffee, celery, cascarilla, sandalwood, cocoa, ylang, fennel, anise, licorice, St. John's bread, plum extract, peach extract, etc.), sugars (e.g., glucose, fructose, isomerized sugar, caramel, etc.), cocoa (powder, extract, etc.), esters (e.g., isoamyl acetate, linalyl acetate, isoamyl propionate, butyrate, etc.), ketones (e.g., menthone, ionone, damasenone, ethyl maltol, etc.), alcohols (e.g., geranio, linalool, anethol, eugenol, etc.), aldehydes (e.g., vanillin, benzaldehyde, anisaldehyde, etc.), lactones (e.g., γ-undecalactone, γ-nonalactone, etc.), animal fragrances (e.g., musk, ambergris, civet, castoreum, etc.), and hydrocarbons (e.g., limonene, pinene, etc.). Flavors may be used in a solid, or may be dissolved or dispersed in a suitable solvent, for example, propylene glycol, ethyl alcohol, benzyl alcohol, or triethyl citrate. These flavors may be used alone or used as a mixture. However, the scope of the present disclosure is not limited by the above-described examples.

Next, the powdered material may be a material that is present in a powder form at room temperature. The powdered material may serve to increase the surface roughness of the flavored sheet. For example, the powdered material may remain on the surface of the flavored sheet after drying and increase the surface roughness of the flavored sheet. However, there may be various types of powdered materials depending on the embodiment.

In some embodiments, the powdered material may be a bulking agent. In other words, the powdered material may be a bulking agent that is present in a powder form. Examples of such bulking agents may include α-cyclodextrin, β-cyclodextrin, and γ-cyclodextrin, but the present disclosure is not limited thereto. For reference, due to the lowest solubility in distilled water, among cyclodextrins, β-cyclodextrin may more effectively increase the surface roughness of the flavored sheet. According to this embodiment, by using a powder-type bulking agent, the surface roughness of the flavored sheet may be increased, and the flavor retention thereof may be improved at the same time.

In addition, in some embodiments, the powdered material may be an emulsifier. In other words, the powdered material may be an emulsifier present in a powder form at room temperature. An example of such an emulsifier may include sucrose ester, but the present disclosure is not limited thereto. According to this embodiment, by using the powder-type emulsifier, the surface roughness of the flavored sheet may be increased, and the flavor holding amount thereof may be improved at the same time. For example, when the flavor is oil-soluble, since the emulsifier serves as a crosslink between a water-soluble hydrocolloid material and an oil-soluble flavor, the flavor holding amount of the flavored sheet may be greatly increased.

In addition, in some embodiments, the powdered material may be a poorly-soluble or insoluble material. For example, the powdered material may be a material having a poorly-soluble or insoluble property in distilled water. In this case, since the amount of the powdered material remaining on the surface of the flavored sheet after drying greatly increases, the surface roughness of the flavored sheet may be further improved.

In addition, in some embodiments, the powdered material may be a material that has a solubility of 100 mg/L or less at 25 °C. For example, the powdered material may be a material having a solubility of 100 mg/L or less in distilled water at 25 °C. An example of such a material may include sucrose ester, but the present disclosure is not limited thereto. According to this embodiment, since the amount of the powdered material remaining on the surface of the flavored sheet after drying is greatly increased, the surface roughness of the flavored sheet may be further improved.

In addition, the powdered material may be, for example, methyl cellulose (MC), ethyl cellulose (EC), cellulose acetate, carboxymethyl cellulose (CMC), or methyl ethyl cellulose (MEC), but the present disclosure is not limited thereto.

Meanwhile, in some embodiments, the sheet composition may further include low methoxyl (LM)-pectin. Alternatively, LM-pectin among the hydrocolloid materials may be included in the sheet composition as a sheet forming agent. LM-pectin is low-ester pectin or LM pectin with relatively little esterification, and may specifically mean pectin that contains approximately less than 50% of carboxyl groups in its molecular structure. Unlike carrageenan, LM-pectin is not gelated when cooled, so the workability of the manufacturing process may be improved by lowering the viscosity of the slurry-type sheet composition (e.g., approximately 600 to 800 cp).

LM-pectin may contain carboxyl groups in its molecular structure at approximately less than 50%, 40%, 30%, 20%, or 10%. As the content of carboxyl groups in the molecular structure of LM-pectin decreases, the viscosity of LM-pectin-containing slurries (i.e., sheet composition) may be lowered.

In addition, in some embodiments, the sheet composition may further include an emulsifier. The emulsifier may greatly increase the flavor holding amount and flavor retention of the flavored sheet by mixing a flavor with high oil solubility and a water-soluble hydrocolloid material well. Examples of such emulsifiers may include natural emulsifies such as Montanov wax, olive emulsifying wax, lecithin, glyceryl stearate, stearate, etc., and synthetic emulsifiers such as monoglycerides, diglycerides, sorbitan, fatty acid esters, and sucrose esters, but the present disclosure is not limited thereto.

In addition, in some embodiments, the sheet composition may further include a bulking agent. The bulking agent may be a material that increases the volume of the produced flavored sheet by increasing the total mass (i.e., building mass) of a component other than distilled water, and does not affect the original function of the flavored sheet. Specifically, the bulking agent may increase the volume of the flavored sheet, may not substantially increase the viscosity of slurries, and may not have an adverse effect on the flavor retention function of the flavored sheet. Preferably, the bulking agent is starch, modified starch, or a starch hydrolysate. However, the present disclosure is not limited thereto.

Modified starch refers to starch acetate, oxidized starch, hydroxypropyl distarch phosphate, hydroxypropyl starch, distarch phosphate, monostarch phosphate, or phosphated distarch phosphate.

A starch hydrolysate refers to a material that is obtained by a process including starch hydrolysis. The starch hydrolysate may include, for example, a material obtained by direct hydrolysis of starch (i.e., dextrin), or a material obtained by hydrolyzing starch after heat treatment (i.e., indigestible dextrin). The bulking agent may be, for example, dextrin, and more specifically, cyclodextrin.

The starch hydrolysate may be, generally, a starch hydrolysate having a DE value within a range of approximately 2 to 40, and preferably, 2 to 20. As a starch hydrolysate having a DE value within a range of approximately 2 to 20, for example, Pine Dex #100 (Matsutani Chemical Industry Co. Ltd.), Pine Fiber (Matsutani Chemical Industry Co. Ltd.), or TK-16 (Matsutani Chemical Industry Co. Ltd.) may be applied.

The "DE" used herein is the abbreviation of dextrose equivalent, and the DE value represents the degree of hydrolysis of starch, i.e., the rate of starch saccharification. The DE value in the present disclosure may be a value measured by the Willstatter-Schudel method. The characteristics of the starch hydrolysate, for example, the characteristics, such as the molecular weight of the starch hydrolysate or the arrangement of a sugar molecule constituting the starch hydrolysate, are not constant for each molecule of the starch hydrolysate, and are present with a certain distribution or variation. Due to the distribution or variation of the characteristics of the starch hydrolysate, or the difference in cut sections, the starch hydrolysate may exhibit different physical properties (e.g., DE value) depending on a molecule. As above, the starch hydrolysate is a set of molecules exhibiting different physical properties, but the measurement result (i.e., DE value) by the Willstatter-Schudel method is treated as a representative value indicating the degree of starch hydrolysis.

Preferably, the starch hydrolysate may be selected from the group consisting of dextrin having a DE value of approximately 2 to 5, indigestible dextrin having a DE value of approximately 10 to 15, and a mixture of thereof. As the dextrin having a DE value of approximately 2 to 5, for example, Pine Dex #100 (Matsutani Chemical Industry Co. Ltd.) may be used. As the indigestible dextrin having a DE value of approximately 10 to 15, for example, Pine Fiber (Matsutani Chemical Industry Co. Ltd.) may be used.

In addition, in some embodiments, the sheet composition may further include a plasticizer. The plasticizer may impart appropriate flexibility to the flavored sheet, thereby improving the physical properties of the sheet. The plasticizer may include, for example, at least one of glycerin and propylene glycol, but the present disclosure is not limited thereto. For reference, the exemplified plasticizers may further improve the physical properties of the flavored sheet by increasing the water content of the flavored sheet. For example, the exemplified plasticizers may increase a water content to minimize the brittleness of the flavored sheet in sheet cutting, and thus greatly improve the workability of the cutting process. However, as the water content increases, the workability of the process of mixing the pieces of a cut flavored sheet and the cut filler-type tobacco material may be degraded (e.g., the workability of the mixing process may be decreased by accelerating agglomeration due to an increase in water content), and such a problem may be solved by improving the surface roughness of the flavored sheet.

In S200, the prepared sheet composition may be applied and dried to manufacture a flavored sheet. For example, the sheet composition may be applied (e.g., casted) and dried to manufacture a flavored sheet.

In some embodiments, during or before drying the applied sheet composition, a step of adding a powdered material may be performed. Here, the added powdered material may be the same as or different from that included in the sheet composition. In addition, in some cases, the powdered material may not be mixed into the sheet composition, and may be added during dying. To provide the convenience of understanding, this embodiment is described in detail with reference to FIG.2.

As shown in FIG. 2, a sheet composition 2 may be applied through an applicator 1. In addition, while the applied sheet composition 2 is dried (see dotted line square), a powdered material 4 may be sprayed (added) to the sheet composition 2 using a sprayer 3. In this case, as the powdered material 4 is dried while distributed on the surface of the sheet composition 2, after drying, most of the powdered material 4 remains evenly on the surface of the flavored sheet 10. In addition, accordingly, the surface roughness of the flavored sheet 10 may be greatly improved.

Meanwhile, the flavored sheet manufactured as described above may have various composition ratios (content ratios). However, the specific composition ratio may vary depending on the mixing ratio and drying conditions of the sheet composition.

In some embodiments, the flavored sheet may include approximately 0.5 to 10 parts by weight of an emulsifier based on a total of 100 parts by weight. Within this numerical range, it was confirmed that the holding amount and retention of a flavor increases. For example, it was confirmed that when the content of the emulsifier is too small, the increase in the flavor holding amount is insignificant, and when the content of the emulsifier is too large, the content of a sheet forming agent, which coats the flavor, or the flavor is reduced such that the flavor holding amount does not greatly increase.

In addition, in some embodiments, the flavored sheet may include approximately 10 to 60 parts by weight or 10 to 40 parts by weight, preferably, approximately 20, 22, 24 or 26 parts by weight or more, of a flavor based on a total of 100 parts by weight. When an appropriate amount of the emulsifier is added, it was confirmed that the holding amount of the oil-soluble flavor is increased by approximately 10%, 15%, or 20% or more, compared with when the emulsifier is not added.

In addition, in some embodiments, the flavored sheet may include approximately 2 to 15 parts by weight of water, approximately 25 to 90 parts by weight of modified cellulose, and approximately 0.1 to 60 parts by weight of a flavor, based on a total of 100 parts by weight. In addition, the flavored sheet may further include approximately 0.5 to 10 parts by weight of an emulsifier.

In addition, in some embodiments, the flavored sheet may include approximately 2 to 15 parts by weight of water, approximately 1 to 60 parts by weight of a hydrocolloid material, approximately 1 to 60 parts by weight of LM-pectin, and approximately 0.1 to 60 parts by weight of a flavor, based on a total of 100 parts by weight. In addition, the flavored sheet may further include approximately 0.5 to 10 parts by weight of an emulsifier.

In addition, in some embodiments, the plasticizer may be included at approximately 0.1 to 30 parts by weight based on a total of 100 parts by weight of the flavored sheet, and preferably, approximately 5 to 30 parts by weight, 5 to 25 parts by weight or 5 to 20 parts by weight. Within this numerical range, a sheet having appropriate flexibility may be formed. For example, when an excessively small amount of the plasticizer is added, the flavored sheet may be easily broken in a cutting process due to the decreased flexibility of the sheet, and when an excessively large amount of the plasticizer is added, the sheet may not be formed well or may be mushy.

In addition, in some embodiments, water may be included at approximately 5 to 30 parts by weight, and preferably, approximately 5 to 25 parts by weight, 5 to 20 parts by weight or 5 to 15 parts by weight based on a total of 100 parts by weight of the flavored sheet. Within this numerical range, a sheet having excellent physical properties may be formed. For example, when the water content is too small, the flavored sheet may be easily broken in a cutting process, and when the water content is too large, the sheet may not easily be formed or runny.

So far, referring to FIGS. 1 and 2, a flavored sheet according to some embodiments of the present disclosure and a method of manufacturing the same have been described. As described above, a flavored sheet with an improved (increased) surface roughness may be manufactured by mixing a powdered material into a sheet composition or adding a powdered material in the manufacturing process. Since the flavored sheet has a small actual area that can be in contact with another material, it may be evenly mixed with a cut filler-type tobacco material, and the workability of the mixing process may be improved.

Referring to the subsequent drawings after FIG. 3, a smoking article 100 which includes the above-described flavored sheet, thereby improving flavor expression and flavor persistence, will be described in detail below.

FIG. 3 is an exemplary view schematically illustrating a smoking article 100 according to some embodiments of the present disclosure.

As shown in FIG. 3, the smoking article 100 may include a filter part 120, a smoking material part 110, and a wrapper 130. However, in FIG. 3, only components relevant to the embodiment of the present disclosure are shown. Accordingly, those of ordinary skill in the art to which the present disclosure belongs may understood that other general-purpose components, other than the components shown in FIG. 3, may be further included. In addition, since FIG. 3 shows an example of a smoking article according to some embodiments of the present disclosure, the detailed structure of the smoking article may be different from that shown in FIG. 3. Each component of the smoking article 100 will be described below.

The filter part 120 may serve to filter smoke and/or aerosol generated in the smoking material part 110. To this end, the filter part 120 may include a filter material. Examples of the filter material may include cellulose acetate fiber and paper, but the scope of the present disclosure is not limited thereto. The filter part 120 may further include a wrapper 130 which surrounds the filter material (plug).

As shown, the filter part 120 may be located downstream of the smoking material part 110 and connected with the downstream end of the smoking material part 110. For example, the filter part 120 and the smoking material part 110 may have a cylindrical (rod) shape and may be aligned in a longitudinal axis direction, and may be coupled by a tipping wrapper. The tipping wrapper may wrap at least a part of the filter part 120 and at least a part of the smoking material part 110 to couple the filter part 120 and the smoking material part 110. When the filter part 120 forms the downstream end of the smoking article 100, the filter part 120 may function as a mouthpiece that contacts a smoker's mouth.

Since the filter part 120 is manufactured in the form of a rod, in some cases, it may be referred to as a "filter rod 120," and may be manufactured in various shapes such as a cylindrical shape, a tube shape having a hollow, and a recessed shape.

Next, the smoking material part 110 may include a smoking material which may generate smoke and/or aerosol by combustion or heating. The smoking material part 110 may further include a wrapper 130 which surrounds the smoking material.

As described above, the smoking material part 110 may be located upstream of the filter part 120 and connected with the upstream end of the filter part 120. Smoke and/or aerosol generated in the smoking material part 110 by a puff may be delivered to a smoker's mouth through the filter part 120.

Since the smoking material part 110 is manufactured in a rod form, in some cases, it may also be referred to as a "smoking material rod 110." Alternatively, the smoking material part 110 may be referred to as a "medium part 110."

The smoking material may include, for example, a tobacco material. The tobacco material may include, for example, pieces of tobacco leaves, tobacco stems, or a material processed therefrom. As more specific examples, the tobacco material may include, but is not limited to, shredded tobacco leaves, shredded reconstituted tobacco, an expanded cut filler, expanded midribs, and reconstituted tobacco leaves. However, the present disclosure is not limited thereto. In addition, the tobacco material may have a cut filler form (e.g., cut leaf tobacco filler or cut reconstituted tobacco filler), a sheet form, a powder form, or tobacco extract form, but the present disclosure is not limited thereto.

In addition, as shown above, a flavored sheet 10 may be applied to (disposed on) the smoking material part 110. The flavored sheet 10 applied as above may enhance the flavor expression and persistence of the smoking article 100 by continuously expressing a flavor during smoking. In other words, unlike the case where a flavor is added in the form of a liquid, the problem in that a large amount of the flavor fixed (coated) by a sheet forming agent is expressed at the beginning of smoking may be effectively solved by slowly and continuously expressing the flavor during smoking. However, a specific application method of the flavored sheet 10 may vary.

In some embodiments, as shown in FIG. 4, pieces 11 of the cut flavored sheet 10 may be put into a smoking material part 110 while mixed with a cut filler-type tobacco material 111. As described above, since the flavored sheet 10 with improved surface roughness has a small actual contact area, it may be evenly mixed with the cut filler-type tobacco material 111, and thus uniform flavor expression may be ensured during smoking.

In addition, in some embodiments, the flavored sheet 10 may be attached to a sheet-type tobacco material (e.g., reconstituted tobacco sheet such as reconstituted tobacco leaves), or input to the smoking material part 110 in a rolled form together with a tobacco material.

In addition, in some embodiments, a plurality of cut filler-type tobacco materials may be wrapped with the flavored sheet 10 to be put into the smoking material part 110.

Meanwhile, in some embodiments, the smoking material may further include an additive material such as a wetting agent (humectant), a flavoring and/or an organic acid. For example, the wetting agent may include at least one of glycerin, propylene glycol, ethylene glycol, dipropylene glycol, diethylene glycol, triethylene glycol, tetraethylene glycol, and oleyl alcohol. The wetting agent may keep moisture in the tobacco material to a proper level to make the original taste smooth and to enrich the amount of atomization. In addition, the flavoring may be, for example, licorice, sucrose, fructose syrup, isosweet, cocoa, lavender, cinnamon, cardamom, celery, fenugreek, cascarilla, sandalwood, bergamot, geranium, honey essence, rose oil, vanilla, lemon oil, orange oil, mint oil, caraway, cognac, jasmine, chamomile, menthol, Ylang Ylang, sage, spearmint, ginger, coriander, a clove extract (or clove material), or coffee.

Next, the wrapper 130 may be a material that surrounds at least a part of the smoking material part 110 and/or filter part 120. The wrapper 130 may refer to a separate wrapper of the smoking material part 110 or filter part 120, or a wrapper that surrounds at least a part of the smoking material part 110 and the filter part 120 like a tipping wrapper, or may be a generic term for all wrappers used in the smoking article 100. The wrapper 130 may consist of porous or non-porous wrapping paper, but the scope of the present disclosure is not limited thereto. For example, the wrapper 130 may be formed of metal foil, or a laminated form of wrapping paper and metal foil.

Meanwhile, according to some embodiments of the present disclosure, the flavored sheet 10 may be applied to the wrapper 130. For example, the flavored sheet 10 may be disposed (e.g., attached (laminated) or coated) inside the wrapper 130 in the form of surrounding all or a part of the smoking material part 110. When at least a part of the wrapper 130 consists of metal foil, the flavored sheet 10 may be disposed inside the metal foil. In this case, the flavor expression of the flavored sheet 10 may be further stimulated by heat delivered via the metal foil. In another example, at least a part of the wrapper 130 may consist of the flavored sheet 10. That is, the flavored sheet 10 itself may serve as the wrapper 130 of the smoking article 100. Here, the wrapper 130 may consist of the flavored sheet 10 alone, or consist of an integrated form of the flavored sheet 10 and wrapping paper. In this case, since it is not necessary to perform a process of disposing the flavored sheet 10 on the wrapper 130 (e.g., attachment (lamination) process, or coating process), the process of manufacturing the smoking article 100 may be further simplified.

In addition, in some embodiments, the flavored sheet 10 may be disposed in a cooling part (not shown) with a hollow in a rolled or folded form. For example, the flavored sheet 10 may be disposed in the hollow of the cooling unit (not shown) in a rolled or folded form, or on the inner wall of the hollow of the cooling part (not shown). Here, the flavored sheet 10 may be a punched sheet processed to form a plurality of holes, and the punched sheet may further improve performance of the cooling unit (not shown) due to a large contact area with air flow. For reference, the cooling unit (not shown) may refer to a segment that is located between the smoking material part 110 and the filter part 120 to perform a cooling function for smoke and/or aerosol.

So far, referring to FIGS. 3 and 4, the smoking article 100 according to some embodiments of the present disclosure has been described. As described above, as the flavored sheet 10 is applied to the smoking article 100, the flavor expression and persistence of the smoking article 100 may be improved.

As above, although embodiments of the present disclosure have been described with respect to the accompanying drawings, it should be understood by those of ordinary skill in the art that the above descriptions of the present disclosure are exemplary, and the exemplary embodiments disclosed herein can be easily modified into other specific forms without changing the technical or essential features of the present disclosure. Therefore, it should be interpreted that the exemplary embodiments described above are exemplary in all aspects, and are not limitative. The scope of the present disclosure is defined by the appended claims and encompasses all modifications and alterations derived from meanings, the scope and equivalents of the appended claims.

## Claims

1. A method of manufacturing a flavored sheet, comprising preparing a sheet composition by mixing a hydrocolloid material, a solvent, a powdered material, and a flavor; and drying the prepared sheet composition.

2. The method of claim 1, wherein the hydrocolloid material comprises a modified cellulose material.

3. The method of claim 2, wherein the modified cellulose material comprises at least one selected from hydroxypropylmethyl cellulose, methyl cellulose, carboxymethyl cellulose, and ethyl cellulose.

4. The method of claim 1, wherein the drying of the prepared sheet composition comprises:
applying the prepared sheet composition; and
adding a powdered material to the applied sheet composition and drying the powdered material.

5. The method of claim 1, wherein the powdered material is a material that is poorly soluble or insoluble in the solvent.

6. The method of claim 1, wherein the solvent is distilled water, and the powdered material has a solubility in distilled water of 100 mg/L or less at 25 °C.

7. The method of claim 1, wherein the powdered material is a bulking agent.

8. The method of claim 7, wherein the powdered material comprises β-cyclodextrin.

9. The method of claim 1, wherein the powdered material is an emulsifier.

10. The method of claim 9, wherein the emulsifier comprises sucrose ester.

11. The method of claim 1, wherein the sheet composition further comprises low methoxyl (LM) pectin, which is a material that contains less than 50% of carboxyl groups and is not gelated when cooled.

12. The method of claim 1, wherein the sheet composition further comprises a plasticizer that comprises at least one of glycerin and propylene glycol.

13. A flavored sheet manufactured by the method described in claim 1.

14. A smoking article, comprising a smoking material part in which pieces of the cut flavored sheet manufactured by the method described in claim 1 and a cut filler-type tobacco material are mixed.
